# EUROPÄISCHE PATENTANMELDUNG

(11) **EP 2 703 714 A2**
(43) Veröffentlichungstag der Anmeldung: **05.03.2014**
(21) Anmeldenummer: 13180080.7
(22) Anmeldetag: 12.08.2013
(51) Int. Cl.: F23D 11/40, F23L 15/04, F23N 5/00, F23N 3/00

(54) **Ölbrenner sowie Verfahren zur Regelung einer Mischzonentemperatur hierzu**

(30) Priorität: 31.08.2012 DE 102012017241
(71) Anmelder: ROBERT BOSCH GMBH, 70442 Stuttgart (DE)
(72) Erfinder: Rausch, Rainer, 36304 Alsfeld (DE); Geschwend, Thomas, 35578 Wetzlar (DE); Medeiros, Antonio, 35423 Lich (DE); Cecen, Sadik, 35102 Lohra (DE); Ripplinger, Hans-Joachim, 35460 Staufenberg (DE); Lang, Raphael, 35305 Gruenberg (DE); Schroeder, Thorsten, 35305 Gruenberg (DE); Hetche, Juergen, 35102 Lohra (DE)

(57) **Zusammenfassung**

Die Erfindung betrifft ein Verfahren zur Regelung einer Mischzonentemperatur einer Mischzone (5) eines Brenners (100), mit einer Zuführung der Verbrennungsluft für einen Brennerbetrieb zu der Mischzone (5) über einen mit einem Verbrennungsluftgebläse (3) verbundenen Zuführweg (2), mit einem der Mischzone (5) nachgeschalteten Wärmetauscher (8) sowie einem sich anschließenden Abgasabführweg (9).

Es ist eine Aufgabe der Erfindung, eine Temperatur in der Mischzone (5) in verschiedenen Betriebszuständen und bei veränderter Brennerleistung möglichst konstant zu halten. Erfindungsgemäß ist daher mindestens eine Temperaturerfassungseinheit (10) im Bereich der Mischzone (5) vorgesehen, und bei einer Abweichung der Mischzonentemperatur von einer vorgebbaren Solltemperatur wird die Verbrennungsluftmenge durch Variation der Drehzahl des Verbrennungsluftgebläses (3) verändert. Dadurch ist die Mischzonentemperatur durch Variation des Luftverhältnisses auf eine Solltemperatur einstellbar.

## Beschreibung

Die Erfindung betrifft ein Verfahren zur Regelung einer Mischzonentemperatur einer Mischzone eines Brenners nach dem Oberbegriff des Patentanspruches 1. Zudem betrifft die Erfindung einen Brenner, insbesondere einen Ölbrenner, zum Erzeugen von Wärmeenergie mittels Feuerung gemäß dem Oberbegriff des Anspruches 4.

Aus dem allgemeinen Stand der Technik sind Ölbrenner bekannt. Bei diesen ist ein Verbrennungsluftgebläse im Brenner integriert und besonders bei Brennern geringer Leistung wird das Heizöl in Kleinlast gezündet. In Anlagen, insbesondere Großfeuerungsanlagen, bei denen Öle verwendet werden, die schwieriger zu zünden sind, zum Beispiel schweres Heizöl, wird ein separater gasbefeuerter Zündbrenner genutzt. Generell muss der flüssige Brennstoff im Brennraum möglichst fein zerstäubt werden, um eine große Oberfläche für die Verbrennungsreaktion zu erreichen. Aus Emissionsgründen werden eine lange Verweilzeit und eine möglichst geringe Verbrennungstemperatur angestrebt, um einen guten Ausbrand bei geringer Stickoxidbildung zu erreichen. Ölbrenner sind allgemein mit folgenden Formen der Zerstäubung bekannt: Druckzerstäubung, Rotationszerstäubung und Zerstäubung mittels Zerstäubermedium. Für den Wirkungsgrad eines Ölbrenners ist die Temperatur in einer Mischzone ausschlaggebend.

Besonders bei Feuerungsanlagen für Gebäude ist ein Modulieren eines Brenners wichtig, um die Feuerungsleistung möglichst gut an den aktuellen Wärmebedarf der angeschlossenen Heizkreise anzupassen. Man erreicht damit lange Laufzeiten, wenig Brennerstarts und bei Brennwertkesseln einen guten Wirkungsgrad durch effektive Brennwertnutzung.

Für die Vorwärmung von Verbrennungsluft vor dem Eintritt in eine Mischzone sind Brenner mit einem Luftwärmetauscher bekannt, beispielsweise aus der DE 10 2010 046 733 A1, welche im Bereich der Brenneroberfläche angeordnet sind. Derartige Luftwärmetauscher sind in der Regel geometrisch auf Maximallast, d. h. maximale Feuerungsleistung, ausgelegt. Durch das Modulieren des Brenners auf Kleinlast im stationären Betrieb verringert sich im Luftwärmetauscher der Volumenstrom der Verbrennungsluft, die Strömungsgeschwindigkeit verringert sich und die Verweilzeit erhöht sich. Dies führt dazu, dass die Verbrennungsluft mit erhöhter Temperatur in die Mischzone gelangt und so zu einer erhöhten Mischzonentemperatur beiträgt.

Der Erfindung liegt die Aufgabe zugrunde, eine Temperatur in der Mischzone in verschiedenen Betriebszuständen und bei veränderter Brennerleistung möglichst konstant zu halten.

Erfindungsgemäß wird dies durch die Gegenstände mit den Merkmalen des Patentanspruches 1 und des Patentanspruchs 4 gelöst. Vorteilhafte Weiterbildungen sind den Unteransprüchen zu entnehmen.

Das erfindungsgemäße Verfahren zur Regelung einer Mischzonentemperatur einer Mischzone eines Brenners ist **dadurch gekennzeichnet, dass** mindestens eine Temperaturerfassungseinheit im Bereich der Mischzone vorgesehen ist, und dass bei einer Abweichung der Mischzonentemperatur von einer vorgebbaren Solltemperatur die Verbrennungsluftmenge durch Variation der Drehzahl des Verbrennungsluftgebläses verändert wird. Dadurch ist die Mischzonentemperatur durch Variation des Luftverhältnisses auf eine Solltemperatur einstellbar. Die Vorgabewerte für die Solltemperatur wurden zum Beispiel in versuchen ermittelt und sind werksseitig vorgegeben. Sie sind beispielsweise in einem Kennfeld hinterlegt und können in einer vorteilhaften Ausführungsform in Abhängigkeit vom Brennerbetriebszustand varüeren. Weiterhin können Vorgabewerte für die Solltemperatur bei Bedarf anlagen- und betriebsanhängig durch entsprechendes Fachpersonal verändert werden, um der Betriebssituation eines Brenners im Gesamtsystem einer Heizungsanlage, einschließlich Verbrennungsluftzufuhr- und Abgasabführungssystem, noch besser gerecht zu werden.

Vorteilhafterweise wird bei einer Abweichung der Mischzonentemperatur über eine vorgebbare Solltemperatur die Verbrennungsluftmenge durch Erhöhen der Drehzahl des Verbrennungsluftgebläses bis zum Erreichen der Solltemperatur erhöht. Dadurch steigt das Luftverhältnis bzw. die Luftverhältniszahl Lambda. Mit dieser Maßnahme wird somit ein Kühleffekt durch die zusätzliche Verbrennungsluftmenge erreicht.

Im Umkehrfall, bei einer Abweichung der Mischzonentemperatur unter eine vorgebbare Solltemperatur, wird die Verbrennungsluftmenge durch Verringern der Drehzahl des Verbrennungsluftgebläses bis zum Erreichen der Solltemperatur reduziert. Dadurch verringert sich das Luftverhältnis bzw. die Luftverhältniszahl Lambda. In diesem Betriebszustand wird somit der Verbrennungsluftdurchsatz etwas verringert, um eine intensivere Aufheizung am Luftwärmetauscher zu erreichen.

Der erfindungsgemäße Brenner, insbesondere Ölbrenner, verwendet mindestens eine Temperaturerfassungseinheit im Bereich der Mischzone. Bei einer Abweichung der Mischzonentemperatur von einer vorgebbaren Solltemperatur wird die Verbrennungsluftmenge durch Variation der Drehzahl des Verbrennungsluftgebläses verändert, wodurch die Mischzonentemperatur durch Variation des Luftverhältnisses auf eine Solltemperatur einstellbar ist.

Vorzugsweise ist die Temperaturerfassungseinheit in der Nähe des Luftwärmetauschers angeordnet und es ist eine Lambdasonde im Abgasabführweg zur Überwachung der Anpassung des Luftverhältnisses bzw. der Luftverhältniszahl Lambda vorgesehen.

Mit der Erfindung wird eine Temperatur in der Mischzone in verschiedenen Betriebszuständen und bei veränderter Brennerleistung möglichst konstant gehalten. Somit wird eine gute Robustheit im Betrieb, mit sicheren Brennerstarts und einer emissionsarmen Verbrennung erreicht.

Besonders beim Modulieren des Brenners ist das erfindungsgemäße Prinzip vorteilhaft, denn durch das Modulieren auf Kleinlast im stationären Betrieb verringert sich der Volumenstrom der Verbrennungsluft, die Strömungsgeschwindigkeit verringert sich und die Verweilzeit erhöht sich. Eine Temperaturerhöhung tritt dann beispielsweise auch durch die Trägheit am Luftwärmetauscher im Falle einer Leistungsrücknahme ein, wenn dessen Oberflächen trotz schon kleiner werdender Beaufschlagung durch die Flammenwärme noch die überschüssige Wärme von der vorangegangenen Brennphase im größeren Leistungsbereich auf die im Inneren geführte Luft abgeben. Mit der Erfindung wird dies zuverlässig erkannt. Und es werden dann entsprechende Gegenmaßnahmen eingeleitet, sodass die Temperatur wieder auf ein konstantes, für den aktuellen Betriebszustand günstiges Niveau geregelt wird.

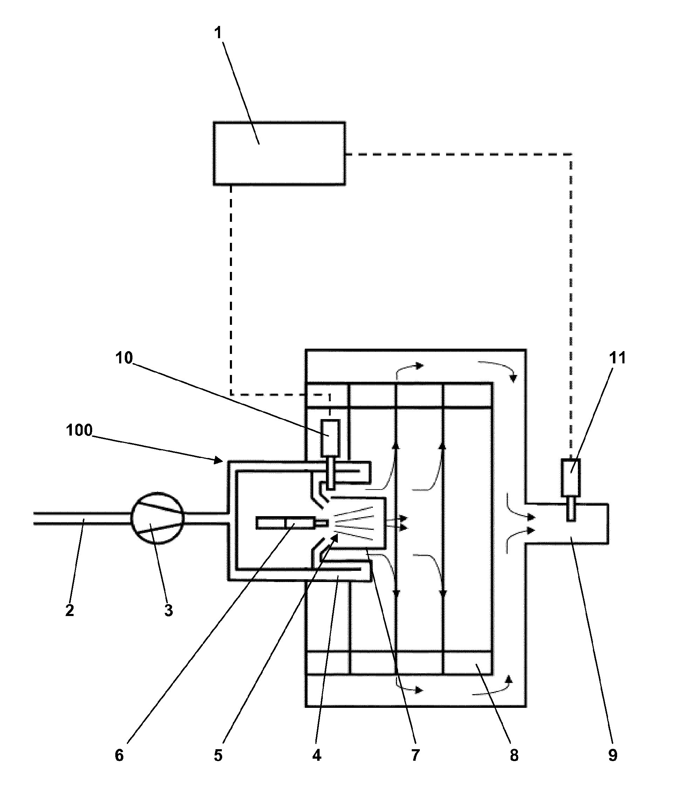

Die Zeichnung stellt ein Ausführungsbeispiel der Erfindung dar und zeigt in der einzigen Figur den schematischen Aufbau eines Brenner mit einer Regeleinrichtung.

Die Figur zeigt schematisch einen Brenner 100, ausgebildet als modulierender Ölbrenner, mit einer Regeleinrichtung 1, mit einem Zuführweg 2 für die Verbrennungsluft, einem Verbrennungsluftgebläse 3, einem Luftwärmetauscher 4 zur Vorwärmung der Verbrennungsluft vor dem Eintritt in eine Mischzone 5, einer Öleinspritzvorrichtung 6 sowie einem Brennstab 7 für eine Verbrennung eines Verbrennungsmediums. Luft und Öl werden in der Mischzone 5 möglichst homogen gemischt und im Wesentlichen an der Oberfläche des Brennstabes 7 verbrannt. Die Strahlungswärme dient dabei der Vorwärmung der Verbrennungsluft im umgebenden Luftwärmetauscher 4. Verbrennungsgase strömen aus dem Bereich des Brenners 100 in einen nachgeschalteten Wärmetauscher 8, welcher den Brenner umgibt und einen Brennraum begrenzt. Sie geben dort Wärme an ein Heizmedium ab, und gelangen in einen sich anschließenden Abgasabführweg 9.

Eine Temperaturerfassungseinheit 10 ist im Bereich der Mischzone 5 vorgesehen. Bei einer Abweichung der Mischzonentemperatur von einer vorgebbaren Solltemperatur wird die Verbrennungsluftmenge durch Variation der Drehzahl des Verbrennungsluftgebläses 3 verändert, wodurch die Mischzonentemperatur durch Variation des Luftverhältnisses auf eine Solltemperatur einstellbar ist.

Eine Lambdasonde 11 im Abgasabführweg 9 dient zur Überwachung der Anpassung des Luftverhältnisses bzw. der Luftverhältniszahl Lambda. Sie ist wie die Temperaturerfassungseinheit 10 mit der Regeleinrichtung 1 verbunden.

## Patentansprüche

1. Verfahren zur Regelung einer Mischzonentemperatur einer Mischzone (5) eines Brenners (100), mit einer Zuführung der Verbrennungsluft für einen Brennerbetrieb zu der Mischzone (5) über einen mit einem Verbrennungsluftgebläse (3) verbundenen Zuführweg (2), mit einem der Mischzone (5) nachgeschalteten Wärmetauscher (8) sowie einem sich anschließenden Abgasabführweg (9),
**dadurch gekennzeichnet, dass** mindestens eine Temperaturerfassungseinheit (10) im Bereich der Mischzone (5) vorgesehen ist, und dass bei einer Abweichung der Mischzonentemperatur von einer vorgebbaren Solltemperatur die Verbrennungsluftmenge durch Variation der Drehzahl des Verbrennungsluftgebläses (3) verändert wird, wodurch die Mischzonentemperatur durch Variation des Luftverhältnisses auf eine Solltemperatur einstellbar ist.

2. Verfahren nach Anspruch 1,
**dadurch gekennzeichnet, dass** bei einer Abweichung der Mischzonentemperatur über eine vorgebbare Solltemperatur die Verbrennungsluftmenge durch Erhöhen der Drehzahl des Verbrennungsluftgebläses (3) bis zum Erreichen der Solltemperatur erhöht wird, wodurch das Luftverhältnis bzw. die Luftverhältniszahl Lambda steigt.

3. Verfahren nach Anspruch 1 oder 2,
**dadurch gekennzeichnet, dass** bei einer Abweichung der Mischzonentemperatur unter eine vorgebbare Solltemperatur die Verbrennungsluftmenge durch Verringern der Drehzahl des Verbrennungsluftgebläses (3) bis zum Erreichen der Solltemperatur reduziert wird, wodurch sich das Luftverhältnis bzw. die Luftverhältniszahl Lambda verringert.

4. Brenner (100), insbesondere ein Ölbrenner,
**dadurch gekennzeichnet, dass** ein Verfahren zur Regelung einer Mischzonentemperatur einer Mischzone (5) nach einem der Ansprüche 1 bis 3 vorgesehen ist, welches mindestens eine Temperaturerfassungseinheit (3) im Bereich der Mischzone (5) verwendet, und dass bei einer Abweichung der Mischzonentemperatur von einer vorgebbaren Solltemperatur die Verbrennungsluftmenge durch Variation der Drehzahl des Verbrennungsluftgebläses (3) verändert wird, wodurch die Mischzonentemperatur durch Variation des Luftverhältnisses auf eine Solltemperatur einstellbar ist.

5. Brenner (100) nach Anspruch 4,
**dadurch gekennzeichnet, dass** eine Lambdasonde (11) im Abgasabführweg (9) zur Überwachung der Anpassung des Luftverhältnisses bzw. der Luftverhältniszahl Lambda vorgesehen ist.
